# EUROPEAN PATENT APPLICATION

(11) **EP 2 172 685 A2**
(43) Date of publication of application: **07.04.2010**
(21) Application number: 10150585.7
(22) Date of filing: 12.09.2006
(51) Int. Cl.: F16L 19/08

(54) **Corrosion resistant conduit systems with enhanced surface hardness**

(30) Priority: 13.09.2005 US 224758
(62) Divisional of application: 06803379.4
(71) Applicant: Swagelok Company, Solon, OH 44139 (US)
(72) Inventor: Williams, Peter C, Cleveland Heights, OH 44121 (US)
(74) Representative: Neill, Alastair William

(57) **Abstract**

A pre-assembly for use in providing a conduit system with an enhanced surface treatment, the conduit system being formed from a stainless steel conduit (13) and a fitting (10) formed from multiple components at least one of which is made from stainless steel, the pre-assembly (12,32,26,16) comprising the stainless steel conduit and at least at one stainless steel component of the fitting physically combined with one another, the pre-assembly having been case hardened by low temperature carburization while the stainless steel conduit and the at least one stainless steel component are pre-assembled with one another.

## Description

### Background and Summary

Low temperature carburization ("LTC") of stainless steel has been described in a number of publications including U.S. Patent No. 5,792,282, EPO 0787817, Japanese Patent Document 9-14019 (Kokai 9-268364), U.S. Patent No. 6,165,597 and U.S. Patent No. 6,547,888. The disclosure of these documents is incorporated herein by reference. In this technology, a workpiece is contacted with a carbon-containing gas at elevated temperature less than 1000°F (538°C). As a result, high concentrations of elemental carbon diffuse into the workpiece surfaces without formation of carbide precipitates. The result is that surface hardness and corrosion resistance of the workpiece are significantly enhanced.

This technology has been used to surface harden the components of ferrule-based fittings used for forming stainless steel conduit systems. Surface hardening of the conduit itself, however, is not normally done.

In accordance with this disclosure, the stainless steel conduit used in such a system is itself case hardened by low temperature carburization, this case hardening being done by pre-attaching the ferrule and optionally other parts of such a fitting to the stainless steel conduit and then subjecting the pre-assembly so formed to LTC.

The technology of this disclosure can also be used more broadly to apply any diffusion-based surface treatment process to shaped metal articles made from multiple metal workpieces by forming a pre-assembly of these workpieces and then subjecting the pre-assembly so formed to the diffusion-based surface treatment process.

Thus in a particular embodiment, this disclosure provides a process for making a corrosion resistant conduit system with enhanced surface hardness in which a pre-assembly formed from a stainless steel conduit and a pre-attached stainless steel ferrule-based fitting, or a stainless steel component of such a fitting, is low temperature carburized so that the surfaces of the stainless steel tube and fitting or fitting component are case hardened without formation of carbide precipitates.

More broadly, this disclosure provides a process for applying a diffusion-based surface treatment to an article made from a first cooperating workpiece defining a first mating surface and a second cooperating workpiece defining a second mating surface, the first and second mating surfaces being under substantial compressive stress when the article is in final form, the process comprising forming a pre-assembly of these cooperating metal workpieces and then subjecting the pre-assembly to the diffusion-based surface treatment.

In addition, this disclosure further provides a pre-assembly for use in forming a corrosion resistant conduit system with enhanced surface hardness, the pre-assembly comprising a stainless steel conduit having a pre-attached ferrule-based fitting, or a component of such a fitting, the pre-assembly having been case hardened by low temperature carburization so that the surfaces of the stainless steel tube and fitting or fitting component are essentially free of carbide precipitates.

In addition, this disclosure also provides a corrosion resistant conduit system with enhanced surface hardness, the conduit system comprising a case hardened stainless steel conduit joined to a stainless steel ferrule-based fitting, or a stainless steel component of such a fitting. Desirably, this conduit system is formed by pulling up the fitting body and fitting nut of a ferrule-based fitting on a pre-assembly composed a stainless steel conduit having a pre-attached stainless steel ferrule on at least one end, the pre-assembly having been case hardened by low temperature carburization so that the surfaces of the stainless steel tube and ferrule are essentially free of carbide precipitates.

In addition, this disclosure also provides a process for applying a diffusion-based surface treatment to a conduit system composed of at least one stainless steel conduit and at least one fitting, the fitting or at least a component of the fitting also being made from stainless steel, the process comprising mechanically joining the stainless steel conduit and the fitting or the stainless steel component of the fitting to form a pre-assembly and then subjecting the pre-assembly to the diffusion-based surface treatment. Preferably, the diffusion-based surface treatment is low temperature carburization. Preferably, the conduit system is a ferrule-based conduit system in which the ferrule is made from stainless steel, and further wherein the stainless steel conduit and the ferrule are mechanically joined to form the pre-assembly. Preferably, the conduit is subjected to plastic flow before low temperature carburization. Preferably, the stainless steel conduit and the ferrule are pre-joined prior to low temperature carburization. Preferably, the ferrule-based conduit system includes a stainless steel conduit and a fitting, the fitting having a fitting body, a stainless steel ferrule and a fitting nut, and further wherein the process comprises low temperature carburizing a pre-assembly comprising the stainless steel conduit, the ferrule and at least one of the fitting body and the fitting nut. Preferably, the fitting body, the fitting nut or both are made from stainless steel. Preferably, an end of the at least one conduit is pre-swaged prior to low temperature carburization. Preferably, the ferrule is a swaging-type fitting, a bite-type fitting or a colleting deformation grip-type fitting. Preferably, a lubricant is applied to the stainless steel conduit onto the outboard end of the ferrule adjacent and outboard of the contact zone between the ferrule and the tube.

In addition, this disclosure also provides a process for applying a diffusion-based surface treatment to an article made from a first cooperating workpiece defining a first mating surface and a second cooperating workpiece defining a second mating surface, the first and second mating surfaces being under substantial compressive stress when the article is in final form, the process comprising forming a pre-assembly of these cooperating metal workpieces and then subjecting the pre-assembly to the diffusion-based surface treatment. Preferably, the diffusion-based surface treatment is low temperature carburization of stainless steel. Preferably, the shape of the first mating surface is at least partially formed by plastic deformation through contact with the second mating surface when the article is in final form, the process further comprising causing the second mating surface to plastically deform the first mating surface after the pre-assembly is formed but before the pre-assembly is subjected to the diffusion-based surface treatment. Preferably, the second mating surface is harder than the first mating surface. Preferably, the first and second cooperating workpieces are joined together to form a pre-assembly, a stress is then applied to the pre-assembly to cause the second mating surface to plastically deform the first mating surface, the stress is relieved, the pre-assembly is then subjected to the diffusion-based surface treatment, and another stress is then applied to the pre-assembly to cause the first and second cooperating workpieces to assume their final form. Preferably, the first and second cooperating workpieces are joined together to form a pre-assembly, a stress is then applied to the pre-assembly to cause the second mating surface to plastically deform the first mating surface, and the pre-assembly is then subjected to the diffusion-based surface treatment without substantially relieving the stress. Preferably, the workpieces are joined in their final form prior to the diffusion-based surface treatment. Preferably, the workpieces are joined in their final form prior to the diffusion-based surface treatment.

### DETAILED DESCRIPTION

### Terminology

In this disclosure, reference to carburizing stainless steel 'without formation of carbide precipitates' means that the amount of carbide precipitates formed, if any, is too small to adversely affect the corrosion resistance of the stainless steel.

In addition, 'tubes,' 'tubing,' 'pipe' and 'conduit' will be understood as referring to the same thing, no difference in meaning being intended. In this connection, the difference between "pipe" and "tube" is basically one of nomenclature and convention arising for historical reasons. In particular, "pipe" was the term traditionally used to refer to conduit having particular inside diameters, while "tube" was the term traditionally used to refer to conduit having particular outside diameters. Thus, "2 inch pipe" was understood as referring to a conduit having a 2 inch inside diameter, while "2 inch tube" was understood as referring to a conduit having a 2 inch outside diameter. Wall thicknesses may also have been different. Later, the convention regarding "pipe" changed so as to as to standardize on fixed outside diameters as well. Today, pipes and tubes are made by the same processes and have the same structure. Therefore, "conduit" is used herein to refer to both pipes and tubes, unless otherwise indicated.

Furthermore, "union" is used herein to refer to the combination of a conduit and a fitting, not just the fitting.

Also, "cooperating workpieces" of an article means two or more pieces or parts of the article which are in direct physical contact with one another when the article is assembled in final form.

Similarly, "final form" as it relates to workpieces in an article refers to the relationship of these workpieces to one another when the article is in its fully assembled final configuration in contrast to the relationship of these workpieces before manufacture of the article is completed. For example, a conduit and the ferrule of a ferrule-based fitting are in "final form" when the fitting is fully tightened up so that attachment of the fitting to the conduit is complete.

### Alloys

The technology of this disclosure is most commonly used for forming a hardened surface or "case" by low temperature diffusion of carbon atoms into the surfaces of iron or nickel-containing alloys. Such materials are well known and described for example in the above-noted US Patent No. 5,792,282, U.S. Patent No. 6,093,303, U.S. Patent No. 6,547,888, EPO 0787817 and Japanese Patent Document 9-14019 (Kokai 9-268364), the disclosures of which are incorporated herein by reference.

The technology of this disclosure finds particular applicability in case hardening steels, especially steels containing 5 to 50, preferably 10 to 40, wt.% Ni. Preferred alloys contain 10 to 40 wt.% Ni and 10 to 35 wt.% Cr. More preferred are the stainless steels, especially the AISI 300 and 400 series steels. Of special interest are AISI 316, 316L, 317, 317L and 304 stainless steels, alloy 600, alloy 625, alloy 825, alloy C-22, alloy C-276 and alloy 20 Cb, to name a few examples.

### Other Diffusion-Based Surface Treatments

This disclosure concentrates on case hardening stainless steel by low temperature carburization. However, the technology of this disclosure can also be used for applying other analogous surface treatments to shaped metal articles made from multiple metal workpieces.

In low temperature carburization, atomic carbon diffuses interstitially into the workpiece surfaces, i.e., carbon atoms travel through the spaces between the metal atoms. Because the processing temperature is low, these carbon atoms form a solid solution with the metal atoms of the workpiece surfaces. They do not react with these metal atoms to form other compounds. Low temperature carburization is therefore different from normal carburization carried out at higher temperatures in which the carbon atoms react to form carbide precipitates, i.e., specific metal compounds such as M₂₃C₆ (e.g., Cr₂₃C₆ or chromium carbide), M₅C₂ and the like, arranged in the form of discrete phases separate and apart from the metal matrix in which they are contained.

Other analogous processes are known for altering the surface characteristics of a metal workpiece. That is, other processes are known in which the hardness, corrosion resistance and/or other surface characteristic of a metal workpiece can be altered by interstitial diffusion of atoms into the workpiece surfaces to form solid solutions with the metal atoms therein without formation of new compounds in separate phases. Examples include nitriding of iron, chromium and/or nickel based alloys, carbo-nitriding of iron, chromium and/or nickel based alloys, and nitriding of titanium-based alloys, to name a few. For convenience, all of these processes will be referred to collectively as "diffusion based surface treatments."

All such diffusion-based surface treatments can be applied using the technology of this disclosure. That is to say, each of these diffusion-based surface treatments can be applied to shaped metal articles made from multiple metal workpieces using the technology of this disclosure by forming a pre-assembly of the metal workpieces first and then subjecting this pre-assembly to the diffusion-based surface treatment.

### Conduit Systems

The technology of this disclosure is particularly suited for producing stainless steel conduit systems which are case hardened by low temperature carburization. By "conduit system" is meant a fluid handling system composed of at least one conduit and at least one additional fluid-handling component such as a coupling, valve, meter, etc., commonly referred to as a "fitting."

Although stainless steel conduits and stainless steel fittings with low temperature carburized ferrules have been used to make stainless steel conduit systems, the conduit systems as a whole and particularly the conduits forming such conduit systems have not been low temperature carburized. In accordance with the technology of this disclosure, however, the entire conduit system-or at least the portions of the conduit system coming into contact with conditions of extreme corrosion and/or mechanical stress-are formed from case hardened stainless steel. Thus, for example, both the conduits and the fittings of a hydrogen supply system in a hydrogen powered automobile can be case hardened in accordance with the technology of this disclosure to prevent corrosion and physical damage from road salt and other road debris. Because at least some of the components forming such a conduit system (including at least one conduit) are pre-assembled, low temperature carburization of the conduit system as a whole can be done much more easily than if the parts were low temperature carburized individually before assembly. And, this is especially so where some of the components of the conduit system in the pre-assembly are "pre-joined" (i.e. joined in their final form without bonding, as further defined below) under significant stress prior to low temperature carburization.

Any type of conduit system can be processed with the technology of this disclosure. Normally, conduit systems in which gripping and sealing of the fittings to the conduits is accomplished mechanically (i.e., without bonding as by welding or adhesive) will be processed. Examples include conduit systems using flare fittings, conduit systems using ferrule-based fittings more fully discussed below, conduit systems using VCO systems (using O-rings for sealing) such as shown in U.S. Patent No. 3,288,494, and conduit systems using VCR (using flat or annular gaskets for sealing) such as shown in U.S. Patent No. 3,521,910. The disclosures of these patents are incorporated herein by reference.

In some of these conduit systems (e.g., flare fitting and some ferrule-based fittings) the conduit ends are plastically deformed prior to final joining of the fitting to the conduit. In others (e.g. VCO and VCR fittings) flanges or others structures may be attached to the conduit ends such as by welding or other techniques. Nonetheless, joining of the fitting to the pre-formed conduit end in such systems is done mechanically.

### Conduit Systems with Ferrule-Based Fittings

Of special interest are conduit systems which are formed from ferrule-based fittings. In this context, a "ferrule-based fitting" is a fitting in which the primary mechanism by which the fitting grips and seals the conduit is done mechanically by a ferrule.

Ferrule-based fittings are well known articles of commerce. Typically, they are composed of a fitting body adapted to fit over the end of the conduit, a fitting nut and a complementary ferrule. Fittings intended for use with metal conduit are almost always made from metal, although other materials are possible. Some ferrule-based fittings use two ferrules, while three or more ferrules are theoretically possible. The fitting body, fitting nut and ferrule(s) are designed such that final tightening of the nut on the fitting body (known as "pull-up") causes the ferrule, the portion of the conduit engaging the ferrule, or both, to plastically deform to a greater or lesser degree.

Four general types of ferrule-based fittings are normally used. The most common can be regarded as a compression-type ferrule. Common, every-day ferrule-based fittings purchased in the corner hardware store are a good example of this. Fittings formed from such ferrules show only minor, localized conduit deformation, with the gripping force created by the ferrule being due primarily to friction.

The second type of ferrule-based fitting can be regarded as a swaging-type fitting. In these fittings, the gripping force created by the ferrule is due primarily to swaging, i.e., significant radial deformation but not cutting, of the conduit surfaces.

The third type of ferrule-based fitting can be regarded as a bite- or cutting-type fitting. In these fittings, the gripping force created by the ferrule is due in significant part to the leading edge of the ferrule cutting into the surface of the conduit. Some swaging of conduit may also occur. Ferrule-based fittings of this type are shown, for example, in U.S. Patent No. 2,179,127, the disclosure of which is incorporated herein by reference.

The fourth type of ferrule-based fitting can be regarded as colleting deformation grip-type fitting. In these fittings, the gripping force created by the ferrule is due to a combination of forces. As in cutting-type fittings, significant gripping force is created as a result of the leading edge of the ferrule cutting into the surface of the conduit. In addition, substantial additional gripping action is generated outboard of this cut through deformation of the ferrule during pull-up. Ferrule-based fittings of this type are shown, for example, in U.S. Patent No. 6,629,708 B2, the disclosure of which is also incorporated herein by reference, especially in Figs. 2-28.

As indicated above, any type of conduit system can be processed with the technology of this disclosure. For example, a conduit system may include a conduit and a fitting formed from multiple components. In one embodiment, a conduit system may include a stainless steel conduit and a fitting formed from multiple components, at least one of which is made from stainless steel. In an exemplary embodiment, a pre-assembly for use in providing a conduit system with an enhanced surface treatment includes a stainless steel conduit and at least one stainless steel component of a fitting that are physically combined with one another, with the pre-assembly having been case hardened by low temperature carburization.

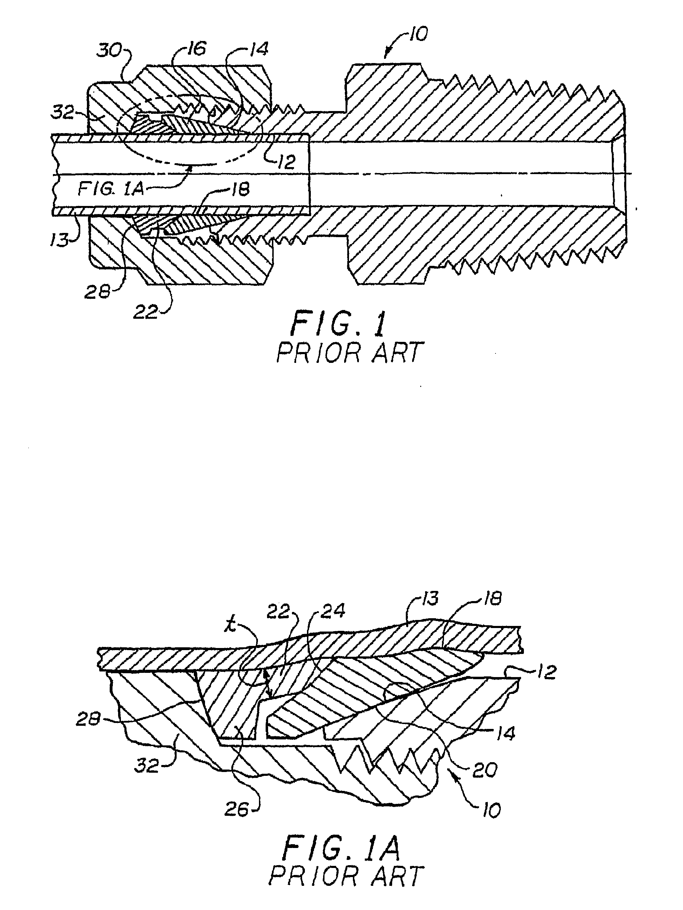

One such exemplary conduit system includes a commercially available and highly successful two ferrule fitting used for tubing, which is illustrated in FIGS. 1 and 1A. FIGS. 1 and 1A are taken from U.S. Patent No. 6,629,708, the disclosure of which has been incorporated by reference as indicated below. FIG. 1 shows the fitting components in a finger tight position preparatory to final tightening, whereas FIG. 1A shows the fitting after final tightening. As shown, the fitting comprises a body 10 having a cylindrical opening 12 counterbored for receiving tube end 13. A tapered, frusto-conical camming mouth 14 is located at the axial outer end of the counterbore. A front ferrule 16 having a smooth, cylindrical inner wall 18 is closely received on the tube. The front ferrule has a frusto-conical outer surface 20 to be received in the camming mouth.

Associated with the front ferrule 16 and located axially outward therefrom is a rear ferrule 22 configured as shown with a tapered nose portion 24 and a rear flange 26 having an inclined end surface 28. The inclined end surface of the rear ferrule 22 provides a radial component as well as an axial component of the pull-up forces acting on the end surface as will be apparent to those skilled in the art. The tapered nose 24 enters a tapered camming surface in the rear surface of the front ferrule.

The ferrules 16, 22 are enclosed by a drive nut member 30 threaded to the body 10. During tightening and make-up of the fitting, the inner end face, flange, or shoulder 32 of the nut acts against the rear wall end surface 28 of the rear ferrule to drive the ferrules forwardly into the fully engaged position shown in FIG. 1A.

The technology of this disclosure is advantageously used for forming case hardened conduit systems with ferrule-based fittings in which the ferrule or ferrules, and optionally the fitting body, the fitting nut or both are made from stainless steel. Moreover, this technology is especially useful for case hardening conduit systems based on swaging-, bite- and/or colleting deformation grip-type fittings where significant mechanical working and assembly steps are necessary to form a completed gas supply system. This is because, rather than subjecting each individual conduit and fitting (or fitting part) to a separate carburization step, most if not all of low temperature carburization can be done in only a single step (or just a few carburization steps) after these mechanical working and assembly steps have been completed or substantially completed.

Also when ferrule-based fittings are used, a lubricant can be applied to the conduit adjacent and outboard of the contact zone between the ferrule and the conduit. *See,* for example, U.S. provisional patent application No. 60/652,631 (atty docket 22188/06884), the disclosure of which is incorporated herein by reference.

### Shaped Metal Articles and Metal Workpieces

Although the technology of this disclosure is particularly useful in forming case hardened conduit systems, it can also be used to make case hardened metal articles of any shape and structure which are composed of at least two mechanically-joined cooperating metal workpieces which define respective mating surfaces under substantial compressive stress when the workpieces are mechanically joined (hereinafter the "broader technology").

In this context, "mechanically-joined" means that the metal workpieces are joined to one another in their final form and relationship without bonding such as by welding or with adhesive. In addition, "mating surfaces" in this context means the surface of each workpiece which is in physical contact with the other workpiece. Finally, "substantial compressive stress" in this context means more than incidental compressive stress. Thus, for example, the mating surfaces of a tightened nut and bolt are under "substantial compressive stress," because the stresses created as a result of their tightened condition will normally prevent the nut and bolt from coming apart. Similarly, the mating surfaces of a ferrule and conduit in a fully tightened fitting, or the mating surfaces of a fully tightened flare fitting formed from a pre-flared conduit and an associated flare fitting, are under "substantial compressive stress," because they will not move relative to one another due to the compressive stresses created by the fittings. In contrast, the rotatably connected wristwatch band pieces described in Example B1 of U.S. Patent No. 6,905,758 B1 do not define respective mating surfaces under substantial compressive stress when these wristwatch band pieces are mechanically joined, because the "connecting parts" to which they are joined allow free rotatable movement of these connecting parts and band pieces with respect to one another.

According to the broader technology of this disclosure, low temperature carburization of cooperating metal workpieces having mating surfaces that are, or will be, under compressive stress is accomplished by pre-assembling two or more of these metal workpieces and then subjecting the pre-assembly so formed to low temperature carburization. Thereafter, the pre-assembled workpieces are mechanically joined to form the completed metal article. Alternatively, the workpieces can be mechanically joined prior to low temperature carburization. In yet another alternative, the workpieces can be mechanically joined partially prior to low temperature carburization, with the remainder of mechanical joining being done after low temperature carburization.

"Pre-assembly" and "pre-assembling" in this context means that the metal workpieces are physically combined so that they contact one another or are capable of contacting one another in a manner such that at least one of the parts can be supported or carried by the other. For example, a ferrule in sliding contact with a conduit, a nut loosely screwed onto a bolt, two links of a chain, and a metal plate with holes carrying screws, would be "physically combined" with one another since each combination could be moved from one location to another by manipulating only one member of the combination without touching the other, even though the non-manipulated member may be free to fall off the manipulated member.

Note, especially, that "pre-assembled" workpieces in this context may already be assembled in final form, i.e., mechanically joined, as when a nut and bolt have been finally tightened. In addition, "pre-assembled" workpieces may also be assembled in a preliminary form, such as when a nut is loosely screwed onto its bolt so that final tightening can be done later.

Because a pre-assembly of some or all of the components forming the product shaped metal article are low temperature carburized, low temperature carburization of the article as a whole can be done much more easily than if each part were individually low temperature carburized before assembly. This makes the overall process of manufacture simpler, faster and more cost-effective.

Note that, not only can the ultimate shaped metal article produced by this technology (i.e. the ultimate product being produced) have any shape, but in addition the metal workpieces forming this ultimate product can also have any shape. In addition, that shape may be formed by any means including bending, stretching, working, machining, etc. Moreover, the metal workpieces forming this product can be formed integrally, i.e., composed of a single piece of material, or they can be composed of multiple metal parts welded or otherwise secured together. Moreover, the metal workpieces can be formed from multiple cooperating parts, such as a valve or the like. In addition, they can include portions or parts which are themselves non-metal, such as the plastic seals of a valve.

### Workpieces Subjected to Plastic Flow Before Pre-Assembly

In one aspect of this broader technology, at least one of the mating surfaces under compressive stress in the article ultimately produced is shaped at least in part by plastic flow. A common example is a flare fit union in which the end of a metal tube is flared before being joined to a complementary flare fitting. A similar example is when a ferrule is pre-swaged onto a conduit as shown, for example, in U.S. Patent No. 6,834,524 B2, the disclosure of which is incorporated herein by reference. In these examples, plastic deformation of this mating surface occurs before pre-assembly of the cooperating metal workpieces (and hence before low temperature carburization of this pre-assembly). Additional plastic deformation of this mating surface can occur after pre-assembly, after low temperature carburization, or both, if desired.

When stainless steels are low temperature carburized, the surface hardness of the steel is significantly enhanced, as previously indicated. In addition, its corrosion resistance is substantially improved over that of the native stainless steel, which is believed due to the high concentration of carbon in the steel's surfaces. Because plastic deformation carried out after low temperature carburization may be physically difficult due to hardness issues, it may be desirable to complete plastic deformation as much as possible prior to low temperature carburization of the pre-assembly to avoid the additional effort needed to plastically deform harder parts.

### Workpieces Subjected to Plastic Flow After Pre-Assembly

Another example where a mating surface under compressive stress is shaped at least in part by plastic flow is in certain types of ferrule-based fittings in which the conduit, ferrule or both undergo plastic deformation as part of pull-up (tightening) of the fitting. In this example, plastic deformation of this mating surface occurs after pre-assembly as a result of joining the cooperating metal workpieces together. In other words, the shape of a "first" mating surface is at least partially formed by plastic deformation through contact with a "second" mating surface when the two cooperating workpieces forming these mating surfaces are joined together.

Normally, all of the plastic deformation needed to achieve mechanical joining of the workpieces in final form is accomplished at this time, prior to low temperature carburization. However, additional plastic deformation of the mating surface can also occur after low temperature carburization, if desired. Also, low temperature carburization of the pre-assembly formed from these workpieces can be done without relieving the compressive stress previously applied to this pre-assembly to cause the plastic deformation. Alternatively, this compressive stress can be relieved, partially or totally, the pre-assembly then low temperature carburized, and another compressive stress then applied to the pre-assembly after low temperature carburization to cause the first and second cooperating workpieces to assume their final form.

### Plastic Flow through Differential Hardness

In a particularly interesting approach, plastic flow (or deformation) of one or a "first" mating surface by a cooperating or "second" mating surface is facilitated by selecting the second mating surface to be harder than the first mating surface. As a result, when the two mating surfaces are subjected to mutual compressive stress, the second mating surface plastically deforms the first mating surface because of its harder nature.

Selecting one mating surface to be harder than the other can be done in a variety of different ways. For example, the cooperating metal workpieces defining these mating surfaces can be formed from different alloys having different hardness's. Alternatively, the cooperating metal workpieces can be made from the same alloy but can be treated prior to pre-assembly to achieve different surface hardness's. For example, the second mating surface can be made harder than the first mating surface by subjecting the second mating surface to a separate, additional low temperature carburization treatment before pre-assembly of the cooperating metal workpieces. Other surface hardening techniques including nitriding, carbonitriding, hot or cold working and the like can also be used. Combinations of these approaches can also be used.

### Pre-joined Workpieces

As indicated above, in one aspect of the technology of this disclosure, referred to herein as "pre-joining," cooperating workpieces are mechanically joined (i.e., the workpieces are brought together in final form) before low temperature carburization. For example, a nut and bolt can be finally tightened before low temperature carburization. Similarly, a ferrule-based fitting can be finally tightened before low temperature carburization. Surprisingly, even the mating surfaces of these workpieces can be effectively case hardened by low temperature carburization, at least when activation (depassivation) is done with a halogen-bearing compound or gas such as HCl, HF, Cl₂, F₂, NF₃, etc.

Stainless steel is stainless because it forms a coherent protective layer of chromium oxide (Cr₂O₃) essentially instantaneously upon exposure to the atmosphere. This chromium oxide layer is impervious to diffusion of carbon atoms. Therefore, it is necessary before low temperature carburization to make the workpiece surfaces transparent to the diffusion of carbon atoms, this treatment typically being referred to as "activation" or "depassivation." This can be done by a variety of different techniques including contacting the workpiece with a hydrogen halide gas such as HCl or HF at elevated temperature (e.g. 500 to 600° F), contacting the workpiece with a strong base, electroplating the workpiece with iron, contacting the workpiece with liquid sodium and contacting the workpiece with a molten salt bath including sodium cyanide. When workpieces are mechanically joined prior to low temperature carburization in accordance with this embodiment, the mating surfaces of these workpieces would be expected not to carburize because physical access to these surfaces is blocked. However in practice, it has been found that in most instances activation and then low temperature carburization will occur adequately even on their mating surfaces, provided that activation is carried out with a halogen-bearing compound or gas such as HCl, HF, Cl₂, F₂, NF₃, etc.

Although only a few embodiments of this technology have been described above, it should be appreciated that many modifications can be made. All such modifications are intended to be included within the scope of this disclosure, which is to be limited only by the following claims.

## Claims

1. A pre-assembly for use in providing a conduit system with an enhanced surface treatment, the conduit system being formed from a stainless steel conduit and a fitting formed from multiple components at least one of which is made from stainless steel, the pre-assembly comprising the stainless steel conduit and at least at one stainless steel component of the fitting physically combined with one another, the pre-assembly having been case hardened by low temperature carburization while the stainless steel conduit and the at least one stainless steel component are pre-assembled with one another.

2. The pre-assembly of claim 1, wherein the pre-assembly comprises a stainless steel conduit having a pre-attached stainless steel ferrule on at least one end.

3. The pre-assembly of claim 2, wherein the ferrule is a component of a ferrule-based fitting including a fitting body, a ferrule and a fitting nut, and further wherein the pre-assembly includes at least one of the fitting body and the fitting nut.

4. The pre-assembly of any of claims 1 to 3 wherein the stainless steel component is harder than the stainless steel conduit before the pre-assembly is case hardened by low temperature carburization.

5. The pre-assembly of claim 4 wherein the stainless steel component is case hardened by low temperature carburization before the pre-assembly is case hardened.

6. The pre-assembly of claim 5 wherein the stainless steel component comprises a ferrule used in a conduit fitting.

7. A corrosion resistant conduit system with enhanced surface hardness, the conduit system comprising a case hardened stainless steel conduit joined to a fitting.

8. The conduit system of claim 7, wherein the conduit system comprises a case hardened stainless steel conduit joined to a ferrule-based fitting.

9. The conduit system of claim 8, wherein the conduit system is formed by pulling up the fitting body and fitting nut of a ferrule-based conduit fitting on a pre-assembly composed a stainless steel conduit having a pre-attached ferrule on at least one end, the pre-assembly having been case hardened by low temperature carburization so that the surfaces of the stainless steel tube and ferrule are essentially free of carbide precipitates.

10. A pre-assembly for use in providing an article with an enhanced surface treatment, the article being made at least from first and second cooperating metal workpieces, the first and second cooperating workpieces defining respective first and second mating surfaces which mate with one another when the article is in final form, the second mating surface being harder than the first mating surface and the shape of the first mating surface being at least partially formed by plastic deformation applied by the second mating surface, the pre-assembly comprising at least the first and second cooperating metal workpieces physically combined with one another, the first mating surface having been at least partially formed by plastic deformation applied by the second mating surface, the pre-assembly also having been case hardened by low temperature carburization.

11. A process for applying a diffusion-based surface treatment to an article made from a first cooperating workpiece defining a first mating surface and a second cooperating workpiece defining a second mating surface, the first and second mating surfaces being under substantial compressive stress when the article is in final form, the process comprising:
the first and second cooperating workpieces are joined together to form the pre-assembly,
a stress is then applied to the pre-assembly to cause the second mating surface to plastically deform the first mating surface,
the stress is relieved,
the pre-assembly is then subjected to the diffusion-based surface treatment, and
another stress is then applied to the pre-assembly to cause the first and second cooperating workpieces to assume their final form.

12. A process for applying a diffusion-based surface treatment to an article made from a first cooperating workpiece defining a first mating surface and a second cooperating workpiece defining a second mating surface, the first and second mating surfaces being under substantial compressive stress when the article is in final form, the process comprising
the first and second cooperating workpieces are joined together to form the pre-assembly,
a stress is then applied to the pre-assembly to cause the second mating surface to plastically deform the first mating surface, and
the pre-assembly is then subjected to the diffusion-based surface treatment without substantially relieving the stress.
